# EUROPÄISCHE PATENTSCHRIFT

(11) **EP 4 088 617 B1**
(45) Veröffentlichungstag und Bekanntmachung des Hinweises auf die Patenterteilung: **26.11.2025**
(21) Anmeldenummer: 22168858.3
(22) Anmeldetag: 19.04.2022
(51) Int. Cl.: A47B 77/08, A47B 88/75, A47J 39/00, F24C 15/30, F25D 23/10

(54) **ANORDNUNG UMFASSEND EIN MÖBEL UND EIN ELEKTROGERÄT**
ARRANGEMENT COMPRISING A PIECE OF FURNITURE AND AN ELECTRICAL APPLIANCE
AGENCEMENT COMPRENANT UN MEUBLE ET UN APPAREIL ÉLECTRIQUE

(30) Priorität: 11.05.2021 EP 21290029
(43) Veröffentlichungstag der Anmeldung: 16.11.2022
(73) Patentinhaber: BSH Hausgeräte GmbH, 81739 München (DE)
(72) Erfinder: Flesch, Sebastien, 67150 Gerstheim (FR)

(56) Entgegenhaltungen:
- WO-A1-2004/057636
- WO-A1-2018/038129
- WO-A2-2020/065344
- DE-A1- 3 208 984
- FR-A1- 2 561 888
- JP-U- H0 736 772
- US-A1- 2013 087 081
- SPARKWORLD LTD: "Fisher & Paykel CoolDrawer", 14 June 2018 (2018-06-14), XP093226905, Retrieved from the Internet <URL:https://www.youtube.com/watch?v=mbzNj4S8Gdk> [retrieved on 20241121]

## Beschreibung

Die vorliegende Erfindung betrifft eine Anordnung umfassend ein Möbel und ein Elektrogerät.

Es ist bekannt, Elektrogeräte, insbesondere Wärmeschubladen, in Küchenzeilen zu verbauen. Küchenzeilen setzen sich regelmäßig aus ein oder mehreren Möbeln, wie etwa Schränken, zusammen. Derartige Schränke weisen gewöhnlich ein Raster auf. Dieses definiert die Höhe und Breite von Schubläden, Türen und anderen Teilen in oder an solchen Schränken. Insbesondere wird durch das Raster die Höhe und Breite von Blenden und Fronten festgelegt, also von solchen Teilen, die von außen sichtbar sind.

Problematisch ist nun, dass dieses Raster von Hersteller zu Hersteller unterschiedlich ist. Demgegenüber weisen beispielsweise Wärmeschubladen gewöhnlich eine Blende fester Höhe auf. Passt das Raster des entsprechenden Schranks nicht zu der Wärmeschublade ergeben sich unerwünscht große Fugen oder ein Einbau ist nicht möglich. Letzteres kann beispielsweise der Fall sein, wenn die Blende an der Wärmeschublade mit einer darüber oder darunterliegenden Blende einer Schublade des Schranks kollidiert. Eine Lösung kann darin bestehen, dass Hersteller Wärmeschubladen mit Blenden unterschiedlicher Höhe anbieten. Dies ist jedoch mit einem Kostenaufwand verbunden.

US 2005 / 0 236 946 A1 zeigt ein modular aufgebautes Möbel mit einer Kühlschublade für die Lagerung von Weinflaschen. Die Front der Kühlschublade ist speziell an das Möbel angepasst.

Die WO 2020/065344 A2 beschreibt ein Lebensmittelaufbewahrungsgerät zum Aufbewahren mehrerer Lebensmittel, die bei unterschiedlichen Umgebungsbedingungen aufzubewahren sind.

Die WO 2004/057636 A1 zeigt eine optische Betriebsanzeige für ein Haushaltgerät, wobei die optische Betriebsanzeige derart ausgebildet ist, dass wenigstens ein von der optischen Betriebsanzeige abgestrahltes Signallicht auf eine Projektionsfläche abbildbar ist.

Die WO 2018/038129 A1 zeigt eine Geschirrspülmaschine, die in ein Möbel eingebaut werden kann.

In der https://www.youtube.com/watch?v=mbzNj4S8Gdk ist ein Einbaukühlschrank zu sehen, der Schubladen aufweist.

Der vorliegenden Erfindung liegt somit die Aufgabe zugrunde, eine verbesserte Anordnung umfassend ein Möbel und ein Elektrogerät zu schaffen.

Demgemäß wird eine Anordnung umfassend ein Möbel mit einer Möbelfront und ein Elektrogerät mit einer Geräteschublade bereitgestellt. Die Möbelfront verdeckt in einem geschlossenen Zustand derselben die Geräteschublade und gibt in einem geöffneten Zustand derselben die Geräteschublade für ein Herausziehen frei. Dabei weist die Anordnung eine Anzeigeeinrichtung auf, die dazu eingerichtet ist, einen Zustand des Elektrogerätes auf der Möbelfront und/oder auf einer Bodenfläche, die vor der Möbelfront liegt, anzuzeigen. Die Möbelfront an dem Möbelkorpus mittels einer Schiene linear beweglich gelagert. Dabei ist die Geräteschublade mechanisch von der Möbelfront entkoppelt, wobei die Geräteschublade eine Schubladenfront aufweist, die in einem nicht herausgezogenen Zustand der Geräteschublade an einer Dichtung anliegt.

Vorteilhaft verdeckt also die Möbelfront in ihrem geschlossenen Zustand die Geräteschublade, sodass diese keine eigene Front bzw. Blende benötigt. Beispielsweise werden somit von außen sichtbare Fugen etc. ausschließlich durch das Möbel bzw. die Möbelfront selbst definiert. Entsprechend kann das Elektrogerät unabhängig vom Raster des Möbels gestaltet werden.

Die Anordnung kann eine Einbauküche oder ein Teil davon, beispielweise eine Küchenzeile, sein. Das Möbel kann ein Schrank, beispielsweise ein Unterschrank oder ein Hängeschrank, sein. Die Möbelfront kann eine Tür oder eine Blende sein. Das Möbel kann ein oder mehrere Schubläden aufweisen.

Nach einer Ausführungsform der Erfindung ist vorgesehen, dass das Möbel einen Möbelkorpus aufweist, an dem die Möbelfront beweglich gelagert ist.

Der Möbelkorpus weist beispielsweise eine quaderförmige Gestalt auf, die an einer Vorderseite eine Öffnung aufweist. "Vorderseite" meint hier die einer Person, die das Elektrogerät bedient, zugewandte Seite. Die Öffnung wird ganz oder teilweise von der Möbelfront in deren geschlossenem Zustand verschlossen.

Die Schublade weist eine Stirnseite auf. Diese ist einer Person, die das Elektrogerät bedient, zugewandt ist. Die Stirnseite ist bei geschlossener Möbelfront von dieser verdeckt. Befindet sich hingegen die Möbelfront in ihrem geöffneten Zustand, so kann eine Person, die das Elektrogerät bedient, die Stirnseite der Schublade sehen und die Schublade herausziehen.

Bei der Lagerung handelt es sich um eine Schiene, mittels derer die Möbelfront linear beweglich gelagert ist. In diesem Fall wird also die Möbelfront von dem geschlossenen Zustand in den geöffneten Zustand und umgekehrt durch eine lineare Bewegung der Möbelfront in der Tiefenrichtung der Anordnung gebracht. Hierbei kann die Möbelfront unmittelbar oder mittelbar an der Schiene angeordnet sein. Beispielweise kann die Möbelfront mit Führungsmitteln vorgesehen sein, die mit innerhalb des Möbelkorpus angeordneten Schienen zusammenwirken. Die Schienen können sowohl am Boden als auch an den Seitenwänden des Korpus des Möbels angeordnet sein.

Nach einer weiteren Ausführungsform weist das Möbel ferner eine Möbelschublade auf, die in dem geschlossenen Zustand der Möbelfront durch dieselbe verdeckt und in dem geöffneten Zustand der Möbelfront für ein Herausziehen freigegeben ist.

Das Möbel kann auch mehrere Möbelschubladen aufweisen. Eine einzige Möbelfront kann sowohl die Geräteschublade bzw. deren Stirnseite als auch die Möbelschublade(n) abdecken.

Die Möbelschublade können von der Möbelfront mechanisch entkoppelt sein. Das heißt, dass die Möbelschublade unabhängig von der Möbelfront bewegt, insbesondere herausgezogen, werden können. Bei dem Elektrogerät handelt es sich vorzugsweise um eine Wärmeschublade, eine Vakuumierschublade, eine Kühlschublade oder eine Weinschublade.

Nach einer vorteilhaften Ausführungsform ist es möglich, die Temperatur und/oder die Luftfeuchtigkeit und/oder den Druck und/oder einen zeitlichen Verlauf einer dieser Variablen innerhalb der Schublade einzustellen. Die Einstellung kann durch eine Bedienoberfläche erfolgen, die an dem Elektrogerät vorgesehen ist. Es ist jedoch auch denkbar, dass die Einstellung durch ein Smartphone, eine Smartuhr, ein Tablet oder einen Rechner (insbesondere drahtlos) vorgenommen wird. Die Ausführung der eingegebenen Einstellungen wird durch eine Steuerungseinheit des Elektrogerätes vorgenommen.

Es ist eine Anzeigeeinrichtung vorgesehen, die dazu eingerichtet ist, einen Zustand des Elektrogerätes auf der Möbelfront und/oder auf einer Bodenfläche, die vor der Möbelfront liegt, anzuzeigen.

Dadurch wird es möglich, den Zustand des Elektrogerätes zu überprüfen, wenn sich die Möbelfront in dem geschlossenen Zustand befindet. Bei dem Zustand des Elektrogerätes kann es sich beispielsweise um eine Temperatur und/oder um eine Luftfeuchtigkeit und/oder um einen Druck und/oder um eine Zeitangabe handeln.

Nach einer weiteren Ausführungsform ist vorgesehen, dass das Elektrogerät eine Sendeeinheit aufweist, die dazu eingerichtet ist, einen Zustand des Elektrogerätes an eine außerhalb des Elektrogerätes angeordnete Empfängereinheit zu übermitteln.

Die Übermittlung erfolgt vorzugsweise drahtlos durch Bluetooth, WLAN oder ein geeignetes Netzwerk. Es kann auch vorgesehen sein, dass die Sendeeinheit die den Zustand des Elektrogerätes betreffenden Daten an eine Cloud sendet, die dann den Zustand des Elektrogerätes an die Empfängereinheit übermittelt.

Bei der Empfängereinheit kann es sich um ein Smartphone, eine Smartuhr, ein Tablet oder einen Rechner handeln.

Es kann auch vorgesehen sein, dass die Empfängereinheit als Bedienoberfläche für die Steuerung des Elektrogerätes dient. In diesem Fall fungiert die Sendeeinheit des Elektrogerätes als Empfängereinheit für die durch die Bedienungsoberfläche angegebenen Befehle, die dann durch eine Steuerungs- und Regelungseinheit des Elektrogerätes ausgeführt werden.

Es kann ferner vorgesehen sein, dass das Elektrogerät ein Gehäuse aufweist und dass die Geräteschublade mittels einer Schiene in dem Gehäuse linear beweglich gelagert ist. Das Gehäuse kann eine Wärmedämmung aufweisen.

Nach einer Ausführungsform ist vorgesehen, dass die Schubladenfront vollständig von der Möbelfront verdeckt ist und/oder dass die Breite und/oder die Höhe der Schubladenfront kleiner ist als die Breite und/oder die Höhe der Möbelfront.

Es kann ferner vorgesehen sein, dass die Anordnung ein zweites Elektrogerät aufweist, das eine Frontblende aufweist, die in einem geschlossenen Zustand derselben mit der Möbelfront in ihrem geschlossenen Zustand bündig ist.

Gemäß einem weiteren Aspekt wird die Verwendung eines Elektrogerätes, insbesondere einer Wärmeschublade, in einer Anordnung, wie vorstehend beschrieben, vorgeschlagen.

Weitere vorteilhafte Ausgestaltungen und Aspekte der hier offenbarten Erfindung sind Gegenstand der Unteransprüche sowie der in den Figuren beschriebenen Ausführungsbeispiele der erfindungsgemäßen aus einem Möbel und einem Elektrogerät bestehenden Anordnung.
Fig. 1 zeigt perspektivisch eine Küchenzeile mit einer Anordnung gemäß einem Ausführungsbeispiel.
Fig. 2 zeigt vergrößert aus Fig. 1 eine Möbelfront in einem geöffneten Zustand.
Fig. 3 zeigt einen Schnitt entlang der Linie III-III der Fig. 1.
Fig. 4 zeigt perspektivisch eine Anordnung gemäß einem nicht erfindungsgemäßen Ausführungsbeispiel.
Fig. 5 zeigt perspektivisch eine Anordnung gemäß einem noch weiteren Ausführungsbeispiel.

In den Figuren sind gleiche oder funktionsgleiche Elemente mit denselben Bezugszeichen versehen worden, sofern nichts anderes angegeben ist.

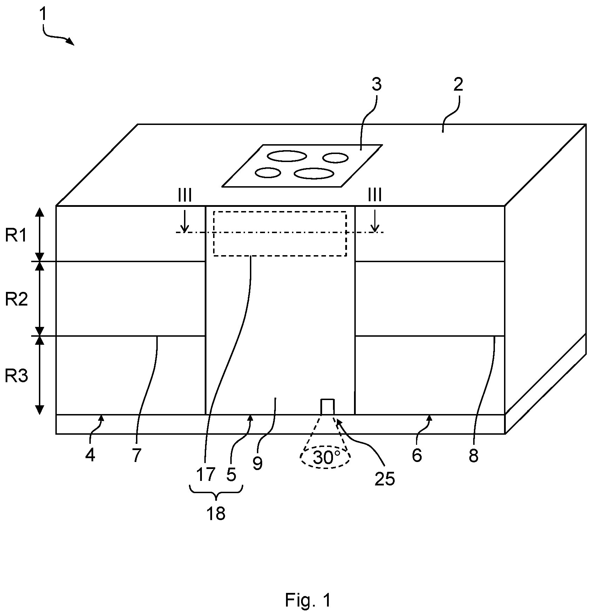

Die Fig. 1 zeigt beispielhaft eine Küchenzeile 1, die eine Küchenarbeitsplatte 2 mit darin integriertem Kochfeld 3 aufweist. Unter der Küchenarbeitsplatte 2 sind mehrere Möbel in Form von Unterschränken 4, 5, 6 angeordnet.

Jeder Unterschrank 4, 5, 6 weist ein oder mehrere Schubläden, Türen usw. auf. Deren Höhen R1, R2, R3 folgen einem herstellerspezifischen Raster. Das führt dann dazu, dass beispielsweise Fugen 7, 8 zwischen Schubläden auf gleicher Höhe sind. Wird ein herkömmliches Einbaugerät, wie etwa ein Backofen, in einen der Unterschränke verbaut, so muss sich dieser mit seiner Blende (sichtbare Außenseite des Geräts) am Raster orientieren.

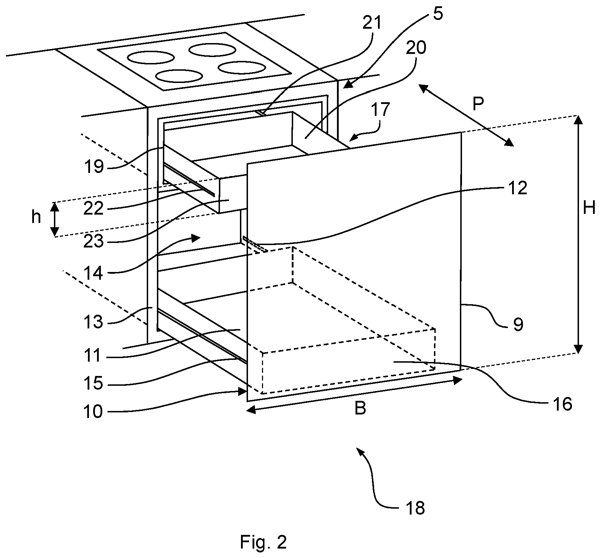

Der Unterschrank 5 weist eine Möbelfront - hier eine Blende 9 - auf. Die Blende 9 weist, wie in Fig. 2 gezeigt, eine Höhe H und eine Breite B auf, die durch ein vom Möbelhersteller abhängiges Raster bestimmt sind.

Die Blende 9 ist Bestandteil einer in Fig. 2 gezeigten Schublade 10. Diese umfasst eine Schubladenkörper 11, der mithilfe von Schienen 12 linear verschieblich an einem Korpus 13 des Unterschranks 5 befestigt ist. Der Korpus 13 weist vorderseitig, d.h. zu einem Bediener hingewandt, eine Öffnung 14. An der Öffnung 14 sind innenseitig die Schienen 12 angeordnet. An dem Schubladenkörper 11 sind Führungsmittel 15 angeordnet. Diese wirken mit den Schienen 12 derart zusammen, dass mittels der linearen Verschiebebewegung in Richtung des Doppelpfeils P die Schublade 10 in den Korpus 13 hinein (geschlossener Zustand der Blende 9) und herausbewegt (geöffneter Zustand der Blende 9) werden kann. Die Blende 9 ist an der in Richtung Vorderseite weisenden Stirnseite 16 des Schubladenkörpers 11 befestigt.

Oberhalb des Schubladenkörpers 11 ist in dem Unterschrank 5 ein Elektrogerät 17 angeordnet. In dem Ausführungsbeispiel ist das Elektrogerät 17 eine Wärmeschublade. Das Elektrogerät 17 und der Unterschrank 5 bilden zusammen eine Anordnung 18.

Das Elektrogerät 17 umfasst ein Gehäuse 19 mit einer darin angeordneten Geräteschublade 20. Die Geräteschublade 20 ist an dem Gehäuse 19 mittels Schienen 21 in Richtung des Doppelpfeils P verschieblich gelagert. Die Schienen 21 sind innenseitig am Gehäuse 19 angeordnet. An der Geräteschublade 20 sind Führungsmittel 22 angeordnet. Diese wirken mit den Schienen 21 derart zusammen, dass mittels einer linearen Verschiebung in Richtung des Doppelpfeils P die Geräteschublade 20 in das Gehäuse 19 hinein- und aus diesem herausbewegt werden kann.

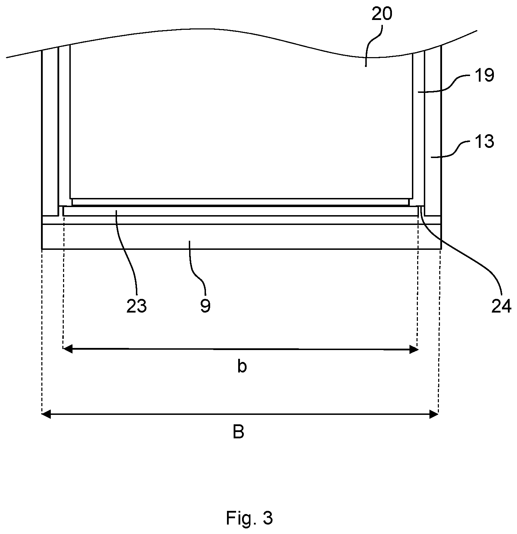

Ferner weist die Geräteschublade 20 an ihrer Stirnseite eine Schubladenfront 23 auf, wie auch in dem in Fig. 3 gezeigten Schnitt III-III aus Fig. 1 zu erkennen. Die Blende 9 ragt von dem Schubladenkörper 11 nach oben und überdeckt in ihrem geschlossenen Zustand die Schubladenfront 23 der Geräteschublade 20, und mithin das Elektrogerät 17, wie dies aus der Fig. 1 ersichtlich ist. Die Schubladenfront 23 weist eine Höhe h und eine Breite b (Fig. 3) auf, die kleiner sind als die Höhe H bzw. die Breite B der Blende 9. Dadurch ist es möglich, dass im geschlossenen Zustand der Blende 9 die Schubladenfront 23 von der Blende 9 vollständig verdeckt ist. Es ist also nicht nötig, das Elektrogerät 17 mit einer eigenen Blende vorzusehen, die an das Raster der Küchenzeile 1 angepasst ist.

Auch ist aus der Fig. 3 ersichtlich, dass die Schubladenfront 23 der Geräteschublade 20 an der Stirnseite 24 des Gehäuses 19 anliegt. Das Gehäuse 19 ist am Korpus 13 durch hier nicht näher gezeichneten Befestigungsmittel befestigt.

Im geöffneten Zustand der Blende 9 (bzw. der Schublade 10) ist die Schubladenfront 23 der Gerätschublade 20 nicht mehr von der Blende 9 verdeckt (Fig. 2). Die Geräteschublade 20 kann sodann herausgezogen werden. D.h., die Geräteschublade 20 ist von der Blende 9 (in deren geöffnetem Zustand) mechanisch entkoppelt. Die Blende 9 ist mit dem Schubladenkörper 11 fest verbunden, d.h., diese können nur gemeinsam bewegt werden.

Die Anordnung 18 umfasst ferner eine Anzeigevorrichtung 25, die in einem geschlossenen Zustand der Blende 9, wenn die Geräteschublade 20 also von der Blende 9 verdeckt ist, einen Zustand des Elektrogerätes, beispielweise die Temperatur im Innenraum der Geräteschublade 20, auf dem Boden vor der Anordnung 18 anzeigen. Die Anzeigevorrichtung 25 kann beispielsweise LEDs umfassen.

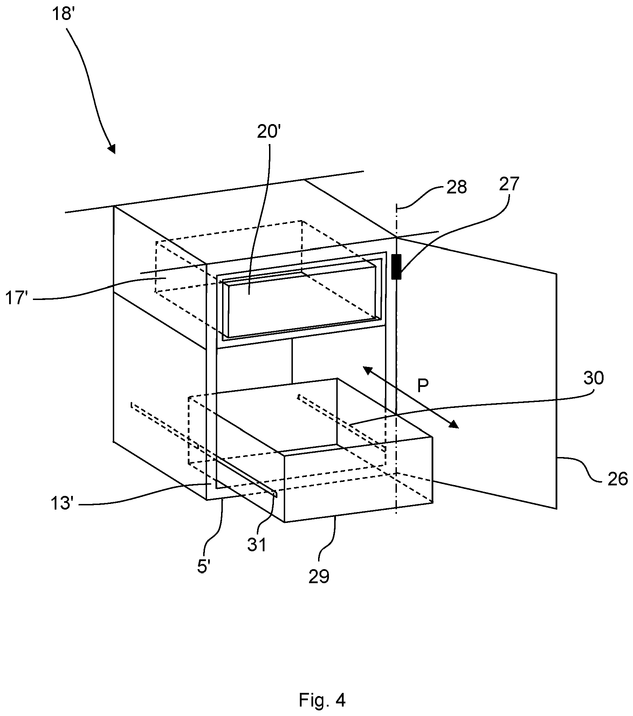

Fig. 4 zeigt eine Variante gegenüber Fig. 2. In der Fig. 4 ist eine Anordnung 18' gezeigt, die ein Möbel 5' und ein Elektrogerät 16' mit einer Geräteschublade 20' aufweist.

In dem in der Fig. 4 gezeigten nicht erfindungsgemäßen Ausführungsbeispiel ist die Möbelfront durch eine Tür 26 gebildet. Diese ist mittels Scharnieren 27 (aus Gründen der Übersicht ist in Fig. 4 nur eines gezeigt) am Korpus 13' des Möbels 5' um eine Achse 28 schwenkbar gelagert. Durch Schwenken der Tür 26 um die Achse 28 kann das Möbel 5' geöffnet oder geschlossen werden. In der Fig. 4 ist das Möbel 5' geöffnet gezeichnet.

Eine Möbelschublade 29 ist mittels Schienen 30 im Korpus 13' linear beweglich gelagert. Die Schienen 30 sind innenseitig am Korpus 13' angeordnet. An der Möbelschublade 29 sind Führungsmittel 31 angeordnet. Diese wirken mit den Schienen 30 derart zusammen, dass mittels einer linearen Verschiebung in Richtung des Doppelpfeils P die Möbelschublade 29 in den Korpus 13' hinein- und aus diesem herausbewegt werden kann.

Anders als in der Ausführungsform gemäß den Fig. 1 bis 3 ist die Möbelschublade 29 von der Tür 26 derart mechanisch entkoppelt, dass eine Öffnungs- oder Schließbewegung der Tür 26 nicht zu einem Herausziehen oder Hineinschieben der Möbelschublade 29 führt. Die Möbelschublade 29 kann also unabhängig von der Tür 26 bewegt werden (wenn sich die Tür 26 in ihrer geöffneten Stellung befindet).

Auch die Geräteschublade 20' ist von der Tür 26 derart mechanisch entkoppelt, dass diese unabhängig voneinander bewegt werden können (wenn sich die Tür 26 in ihrer geöffneten Stellung befindet).

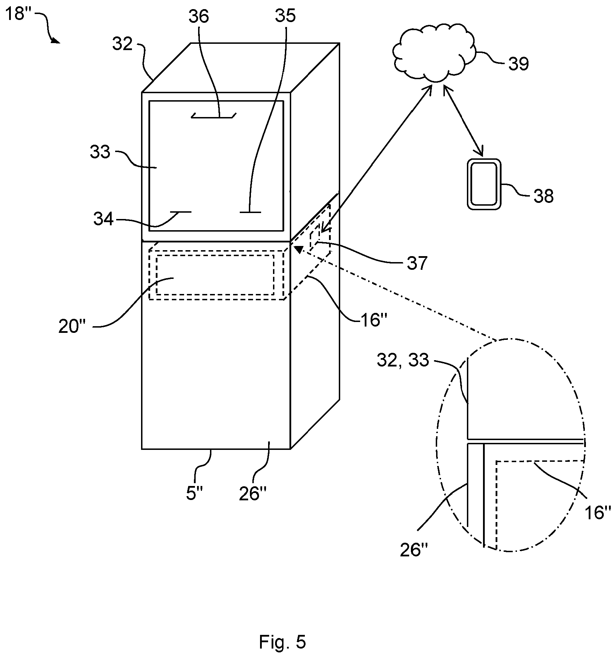

In Fig. 5 ist eine Anordnung 18" gezeigt, die ein Möbel 5" mit einer Tür 26" sowie ein Elektrogerät 16" mit einer Geräteschublade 20" umfasst. Das Möbel 5" ist mit dem Möbel 5' baugleich und das Elektrogerät 16" ist mit dem Elektrogerät 16 baugleich.

Anders als in den Ausführungsformen gemäß den Figuren 1 bis 4 weist die Anordnung 18" gemäß der Fig. 5 ferner ein zweites als Backofen 32 ausgeführtes Elektrogerät. Dieses weist eine als eine Schwenktür 33 ausgeführte Front auf, die um eine horizontale Achse mittels der Scharniere 34, 35 schwenkbar am Korpus des Backofens 32 gelagert ist. Die Schwenktür 33 kann mittels des Griffs 36 geschwenkt und somit geöffnet oder geschlossen werden.

Wie aus der vergrößerten Darstellung in der Fig. 5 ersichtlich, sind, wenn sich sowohl die Tür 26" als auch die Schwenktür 33 in ihrem geschlossenen Zustand befinden, die Tür 26" und die Schwenktür 33 miteinander bündig. Das heißt, dass sowohl die Tür 26' als auch die Schwenktür 33 in einer gemeinsamen Ebene liegen.

Gemäß der Fig. 5 weist ferner das Elektrogerät 16" eine Sendeeinheit 37 auf. Diese ist dazu eingerichtet, einen Zustand des Elektrogerätes 16" an eine außerhalb des Elektrogerätes 16" angeordnete Empfängereinheit 38 drahtlos zu übermitteln. Bei dem Zustand des Elektrogerätes 16" handelt es sich um die Temperatur und die Luftfeuchtigkeit innerhalb der Geräteschublade 20".

In der in der Fig. 5 gezeigten Ausführungsform übermittelt die Sendeeinheit 37 den Zustand des Elektrogerätes 16" zuerst an eine Cloud 39. Diese sendet dann die den Zustand des Elektrogerätes 16" betreffenden Daten an die Empfängereinheit 38. Bei der Empfängereinheit 38 kann es sich um ein Smartphone, um eine Smartuhr, um ein Tablet oder um einen Rechner handeln. Die Empfängereinheit 38 kann aber ebenfalls als Bedienungsoberfläche benutzt werden, um die Temperatur und/oder die Luftfeuchtigkeit innerhalb der Geräteschublade 20" einzustellen.

### Verwendete Bezugszeichen:

- 1: Küchenzeile
- 2: Arbeitsplatte
- 3: Kochfeld
- 4, 5, 6: Unterschränke
- 5', 5": Möbel
- 7, 8: Fugen
- 9: Blende
- 10: Schublade
- 11: Schubladenkörper
- 12: Schienen
- 13, 13': Korpus
- 14: Öffnung
- 15: Führungsmittel
- 16: Stirnseite
- 17, 17', 17": Elektrogerät
- 18, 18', 18": Anordnung
- 19: Gehäuse
- 20, 20', 20": Geräteschublade
- 21: Schienen
- 21: Führungsmittel
- 23: Schubladenfront
- 24: Stirnseite
- 25: Anzeigevorrichtung
- 26, 26': Tür
- 27: Scharnier
- 28: Achse
- 29: Möbelschublade
- 30: Schiene
- 31: Führungsmittel
- 32: Backofen
- 33: Schwenktür
- 34, 35: Scharniere
- 36: Griff
- 37: Sendeeinheit
- 38: Empfängereinheit
- 39: Cloud

- B: Breite der Blende
- b: Breite der Schubladenfront
- H: Höhe der Blende
- h: Höhe der Schubladenfront
- R1, R2, R3: Höhe

## Patentansprüche

1. Anordnung (18) umfassend ein Möbel (5) mit einer Möbelfront (9) und ein Elektrogerät (17) mit einer Geräteschublade (20), wobei die Möbelfront (9) in einem geschlossenen Zustand derselben die Geräteschublade (20) verdeckt und in einem geöffneten Zustand derselben die Geräteschublade (20) für ein Herausziehen freigibt, wobei die Anordnung (18) eine Anzeigeeinrichtung (25) aufweist, die dazu eingerichtet ist, einen Zustand des Elektrogerätes (17) auf der Möbelfront (9) und/oder auf einer Bodenfläche, die vor der Möbelfront (9) liegt, anzuzeigen, wobei die Möbelfront (9) an dem Möbelkorpus (13) mittels einer Schiene (12) linear beweglich gelagert ist, wobei die Geräteschublade (20) mechanisch von der Möbelfront (9) entkoppelt ist, und wobei die Geräteschublade (20) eine Schubladenfront (23) aufweist, die in einem nicht herausgezogenen Zustand der Geräteschublade (20) an einer Dichtung anliegt.

2. Anordnung nach Anspruch 1, **dadurch gekennzeichnet, dass** es sich bei dem Elektrogerät (17) um eine Wärmschublade, eine Vakuumierschublade, eine Kühlschublade oder eine Weinschublade handelt.

3. Anordnung nach einem der Ansprüche 1 oder 2, **dadurch gekennzeichnet, dass** das Elektrogerät (17) ein Gehäuse (19) aufweist und dass die Geräteschublade (20) mittels einer Schiene (21) in dem Gehäuse (19) linear beweglich gelagert ist.

4. Anordnung nach einem der Ansprüche 1 - 3 **dadurch gekennzeichnet, dass** die Schubladenfront (23) vollständig von der Möbelfront (9) in deren geschlossenem Zustand verdeckt ist und/oder dass die Breite (b) und/oder die Höhe (h) der Schubladenfront (22) kleiner ist als die Breite (B) und/oder die Höhe (H) der Möbelfront (9).

5. Verwendung eines Elektrogerätes (17), insbesondere Wärmeschublade, in einer Anordnung (18) nach einem der Ansprüche 1 - 4.

## Claims

1. Arrangement (18) comprising a piece of furniture (5) with a furniture front (9) and an electrical device (17) with a device drawer (20), wherein the furniture front (9) conceals the device drawer (20) in a closed state of the same and in an opened state of the same releases the device drawer (20) for removal, wherein the arrangement (18) has a display facility (25) which is designed to display a state of the electrical device (17) on the furniture front (9) and/or on a floor space which lies in front of the furniture front (8), wherein the furniture front (9) is mounted on the furniture carcass (13) in a linearly movable manner by means of a rail (12), wherein the device drawer (20) is mechanically decoupled from the furniture front (9) and wherein the device drawer (20) has a drawer front (23) which rests against a seal when the device drawer (20) is in a non-removed state.

2. Arrangement according to claim 1, **characterised in that** the electrical device (17) is a warming drawer, a vacuum drawer, a cooling drawer or a wine drawer.

3. Arrangement according to one of claims 1 or 2, **characterised in that** the electrical device (17) has a housing (19) and that the device drawer (20) is mounted in the housing (19) in a linearly moveable manner by means of a rail (21).

4. Arrangement according to one of claims 1 to 3, **characterised in that** the drawer front is completely concealed by the furniture front (9) in its closed state and/or that the width (b) and/or the height (h) of the drawer front (22) is smaller than the width (B) and/or the height (H) of the furniture front (9).

5. Use of an electrical device (17), in particular heated drawer, in an arrangement (18) according to one of claims 1 to 4.

## Revendications

1. Agencement (18) comprenant un meuble (5) avec une façade de meuble (9) et un appareil électroménager (17) avec un tiroir d'appareil (20), dans lequel la façade de meuble (9) cache le tiroir d'appareil (20) lorsqu'elle est fermée et libère le tiroir d'appareil (20) pour qu'il puisse être sorti lorsqu'elle est ouverte, dans lequel l'agencement (18) présente un dispositif d'affichage (25) qui est aménagé pour afficher un état de l'appareil électroménager (17) sur la façade de meuble (9) et/ou sur une surface au sol située devant la façade de meuble (9), dans lequel la façade de meuble (9) est logée de façon mobile linéairement sur le corps de meuble (13) au moyen d'un rail (12), dans lequel le tiroir d'appareil (20) est découplé mécaniquement de la façade de meuble (9), et dans lequel le tiroir d'appareil (20) présente une façade de tiroir (23) contiguë à un joint d'étanchéité lorsque le tiroir d'appareil (20) n'est pas sorti.

2. Agencement selon la revendication 1, **caractérisé en ce que** l'appareil électroménager (17) est un tiroir chauffant, un tiroir de mise sous vide, un tiroir réfrigérant ou un tiroir à vin.

3. Agencement selon l'une des revendications 1 ou 2, **caractérisé en ce que** l'appareil électroménager (17) présente une carcasse (19) et **en ce que** le tiroir d'appareil (20) est logé de façon mobile linéairement dans la carcasse (19) au moyen d'un rail (21).

4. Agencement selon l'une des revendications 1 à 3, **caractérisé en ce que** la façade de tiroir (23) est intégralement cachée par la façade de meuble (9) dans son état fermé et/ou **en ce que** la largeur (b) et/ou la hauteur (h) de la façade de tiroir (22) est inférieure à la largeur (B) et/ou à la hauteur (H) de la façade de meuble (9).

5. Utilisation d'un appareil électroménager (17), en particulier d'un tiroir chauffant, dans un agencement (18) selon l'une des revendications 1 à 4.
